# EUROPÄISCHE PATENTSCHRIFT

(11) **EP 0 566 845 B1**
(45) Veröffentlichungstag und Bekanntmachung des Hinweises auf die Patenterteilung: **31.05.1995**
(21) Anmeldenummer: 93103537.2
(22) Anmeldetag: 05.03.1993
(51) Int. Cl.: F01L 1/34

(54) **Vorrichtung zum Verstellen der relativen Drehlage einer Nockenwelle**
Device for varying the angular position of a camshaft
Dispositif de variation de la position angulaire d'un arbre à cames

(30) Priorität: 21.04.1992 DE 4213038
(43) Veröffentlichungstag der Anmeldung: 27.10.1993
(73) Patentinhaber: Dr.Ing.h.c. F. Porsche Aktiengesellschaft, 70435 Stuttgart (DE)
(72) Erfinder: Möllers, Werner, Dr., W-7135 Wiernsheim (DE)

(56) Entgegenhaltungen:
- DE-A- 4 041 785
- DE-C- 3 719 163
- DE-C- 4 006 910
- DE-U- 8 417 223
- US-A- 4 862 845
- US-A- 5 152 261

## Beschreibung

Die Erfindung betrifft eine Vorrichtung zum Verstellen der relativen Drehlage einer Nockenwelle gemäß dem Oberbegriff des Anspruchs 1.

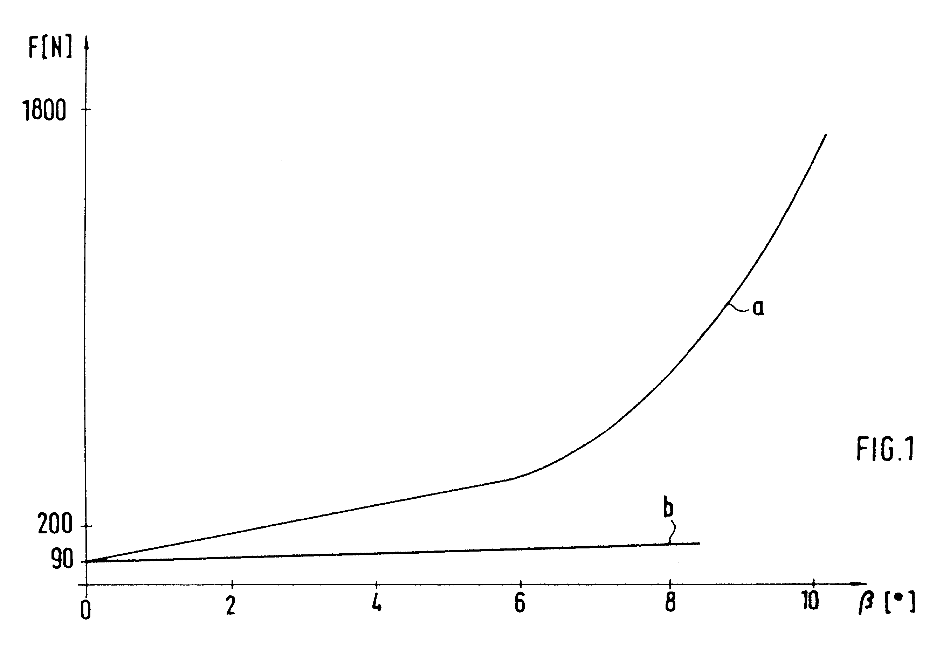

Eine derartige Verstellvorrichtung, die zum Verändern der Ventilsteuerzeiten dient, ist aus DE-PS 40 06 910 bekannt. An einer Kette, mit der die eine Nockenwelle von einer parallel liegenden, zweiten Nockenwelle angetrieben wird, wirkt eine hydraulische Spann- und Verstellvorrichtung. Diese besteht aus zwei konzentrisch zueinander liegenden Hydraulikkolben. Mit einer in dem Hohlraum zwischen den Hydraulikkolben liegenden Schraubendruckfeder werden die Hydraulikkolben gegenläufig zueinander verschoben, wobei die auf die Hydraulikkolben aufgesteckten Spannschuhe gegen die beiden Kettentrums verspannt werden. Der äußere Hydraulikkolben weist einen Bund auf, an dessen beiden Stirnflächen Druckkanäle liegen, die von Hydraulikdruck beaufschlagbar sind. Werden die Stirnflächen abwechselnd mit Druck versorgt, so verlängern sich die jeweils in Bewegungsrichtung des Kolbens befindlichen Trume bei entsprechender Verkürzung der gegenüberliegenden. Wie Versuche gezeigt haben, verhält sich das System in beiden Verstellrichtungen unsymmetrisch. Dies konnte durch Berechnungen bestätigt werden (Fig. 1). Wie Kurve a zeigt, nimmt die Verstellkraft bei ungünstiger Verstellrichtung progressiv zu und geht bei Annäherung an die Strecklage des Gegentrums gegen unendlich. Bereits bei einer Nockenwellenverdrehung von 4 Grad aus der Symmetrielage liegt sie ca. dreimal so hoch wie bei Verstellung in Gegenrichtung. Auch der in Versuchen ermittelte Verstellzeitvergleich zeigt mit einem Verhältnis von 0,6 zu 0,2 s ähnliches Verhalten.

Ursache für das günstigere Verhalten in Gegenrichtung ist die Tatsache, daß in diesem Fall die Verstellkraft des Kolbens nicht zusätzlich zur Vorspannfeder auf den Trum wirkt, sondern statt dessen die Trumkraft auf der Gegenverstellseite reduziert. Es leuchtet sofort ein, daß zur Erreichung der Strecklage des Gegentrums maximal eine Verstellkraft in Höhe der Federvorspannung erforderlich ist.

Es ist die Aufgabe der Erfindung, eine solche Spann- und Verstellvorrichtung in der Weise weiterzubilden, daß die Verstellkraft und Verstellzeit in beiden Verstellrichtungen gleich und möglichst gering sind.

Zur Lösung dieser Aufgabe dienen die kennzeichnenden Merkmale des Anspruchs 1. Wenn zur Verstellung der Kette die Stirnflächen beider Hydraulikkolben unabhängig voneinander mit Hydraulikdruck so beaufschlagbar sind, daß die Druckkraft der die Hydraulikkolben belastenden Federkraft entgegenwirkt, so wird durch die Verstellkraft die wirksame Federkraft reduziert und das zu verkürzende Trum läßt sich leicht in Richtung Strecklage bewegen. Die Verstellkraft und Verstellzeit sind in beiden Verstellrichtungen gleich und sehr gering. Entsprechend klein sind auch die beim Verstellen in den Kettentrums auftretenden Zugspannungen und die Kräfte auf die Lager der Nockenwelle. Da die Verstellkraft über dem Verdrehwinkel der Nockenwelle nur geringfügig ansteigt und insbesondere kein Anstieg gegen unendlich auftritt, kann der durch die geometrischen Größen bestimmte Verstellbereich voll ausgeschöpft werden. Bei unveränderter Geometrie kann die Verstellkraft in der bisher ungünstigen Richtung erheblich reduziert werden. Akzeptiert man dagegen die bisherige maximale Verstellkraft, kann das gewonnene Potential zu einer Verringerung der Baugröße genutzt werden.

Ein Ausführungsbeispiel der Erfindung ist in der Zeichnung dargestellt und wird nachfolgend erläutert.

Es zeigen
- Fig. 1: Diagramm Verstellkraft in Abhängigkeit des Verstellwinkels,
- Fig. 2: Spann- und Verstellvorrichtung in der einen Extremlage,
- Fig. 3: Spann- und Verstellvorrichtung in der anderen Extremlage,
- Fig. 4: an der Kettenaußenseite wirkende Spann- und Verstellvorrichtungen.

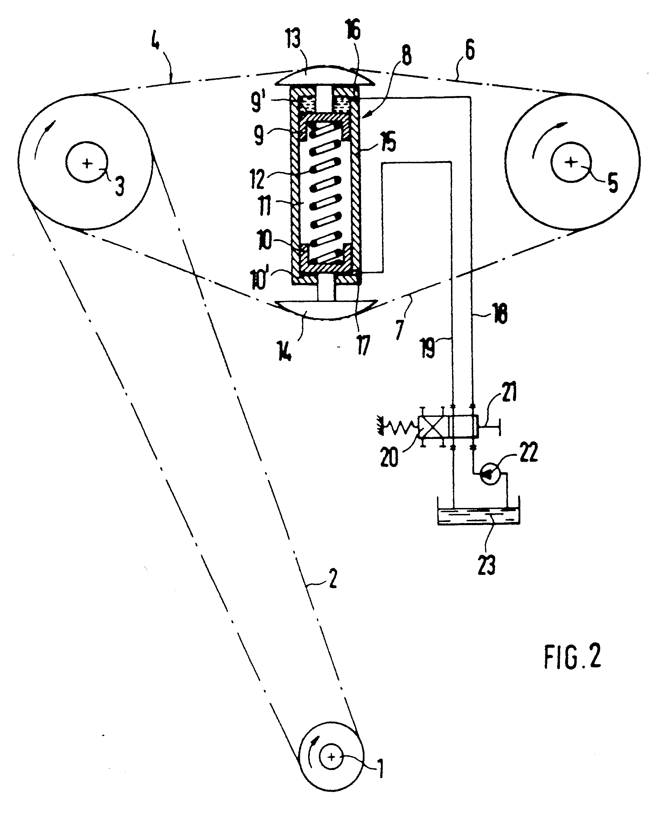

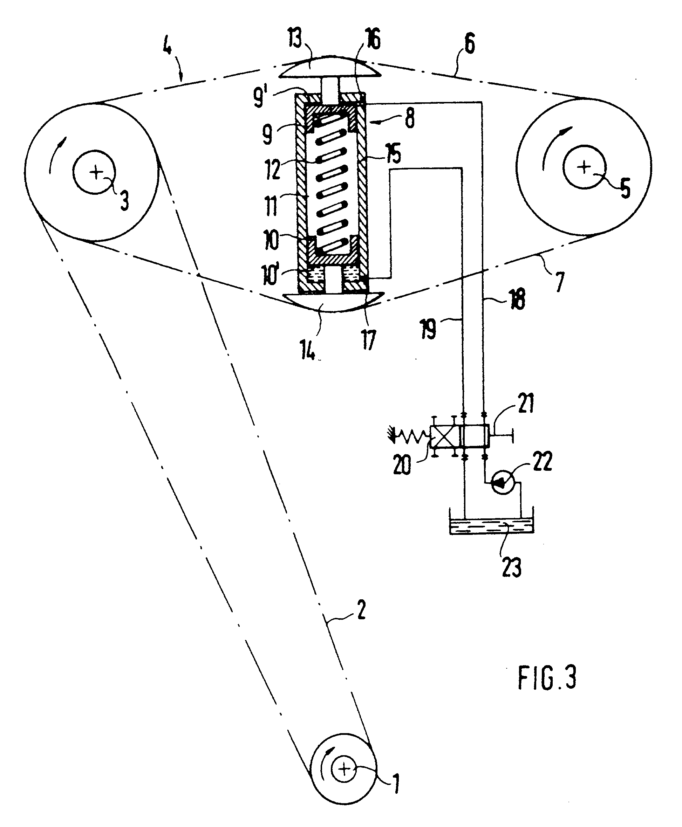

In dem Diagramm Fig. 1 ist in Kurve a die Verstellkraft F in Abhängigkeit des Verdrehwinkels β der Nockenwelle dargestellt, wie sie bei einer Spannund Verstellvorrichtung gemäß DE-PS 40 06 910 auftritt, wenn das Lostrum verkürzt und in Richtung Strecklage gebracht wird. Kurve b zeigt die Verstellkraft F, wenn das Lasttrum In Richtung Strecklage gebracht wird. Da in diesem Fall die auf das Lasttrum wirkende, durch die Schraubendruckfeder verursachte Spannkraft der hydraulisch aufgebrachten Verstellkraft entgegenwirkt, ist die erforderliche Verstellkraft nur geringfügig vom Verdrehwinkel der Nockenwelle abhängig und steigt über dem vollen Verstellbereich bis lediglich 120 N. Bei Verkürzung des Lostrums wächst dagegen die Verstellkraft progressiv mit dem Verstellwinkel β an und erreicht bei β=10° ca 1800 N. Eine Spann- und Verstellvorrichtung eines gemäß der Erfindung ausgebildeten Nockenwellenantriebes ist schematisch in Fig. 2 und Fig. 3 in beiden Extremlagen der Verstellung dargestellt.

Von einer Kurbelwelle 1 eines Hubkolbenmotors ist mit einem Zahnriemen 2 oder einer Kette eine die Auslaßventile betätigende Auslaßnockenwelle 3 angetrieben. Die Auslaßnockenwelle 3 treibt mit einer Kette 4 eine die Einlaßventile steuernde Einlaßnockenwelle 5 an. Am Lostrum 6 und Lasttrum 7 der Kette 4 greift von der Ketteninnenseite her eine Spannvorrichtung 8 an.

Die Spannvorrichtung 8 besteht aus einem hohlen Hydraulikkolben 9, einem zu ihm koaxialen, ebenfalls hohlen Hydraulikkolben 10 und einer im dem Hohlraum 11 zwischen den Hydraulikkolben 9, 10 verspannten Schraubendruckfeder 12. An beiden Hydraulikkolben 9, 10 sind Spannschuhe 13, 14 befestigt, von denen der eine 13 das Lostrum 6, der andere 14 das Lasttrum 7 verspannt.

Die Hydraulikkolben 9, 10 sind in einem ortsfesten Gehäuse 15 längsgeführt. Nahe den Stirnflächen 9' und 10' der Hydraulikkolben 9, 10 weist das Gehäuse 15 Hydraulikanschlüsse 16 und 17 auf, die über Druckleitungen 18 und 19 mit einem Hydroventil 20 verbunden sind. Das Hydroventil 20 ist mit einem Elektromagnet 21 gesteuert und wird mit einer Pumpe 22 aus einem Vorratsbehälter 23 mit Hydraulikflüssigkeit versorgt.

In der einen Stellung des Elektromagnets nach Fig. 2 wird über die Druckleitung 18 Hydraulikdruck auf die Stirnfläche 9' des Hydraulikkolbens 9 gegeben. Die dadurch entstehende Verstellkraft wirkt der Vorspannfeder 12 entgegen und reduziert somit die auf das Lostrum 6 wirkende Kraft. Das hierdurch entstehende Ungleichgewicht der Trumkräfte bewirkt eine Verschiebung in Richtung Lasttrum 7. Dies ist bis zum Erreichen der Strecklage des Lostrums 6 ohne erheblichen Verstellkraftanstieg möglich. In der anderen Stellung des Elektromagnets 21 nach Fig. 3 wird die Stirnfläche 10' des Hydraulikkolbens 10 beaufschlagt; das Lostrum 6 wird ausgebaucht und verlängert. Da die Anlage symmetrisch aufgebaut ist, ist die Verstellkraft in beiden Fällen gleich. Sie beträgt etwa 120 N. Auch die zum Verstellen benötigten Zeiten sind gleich.

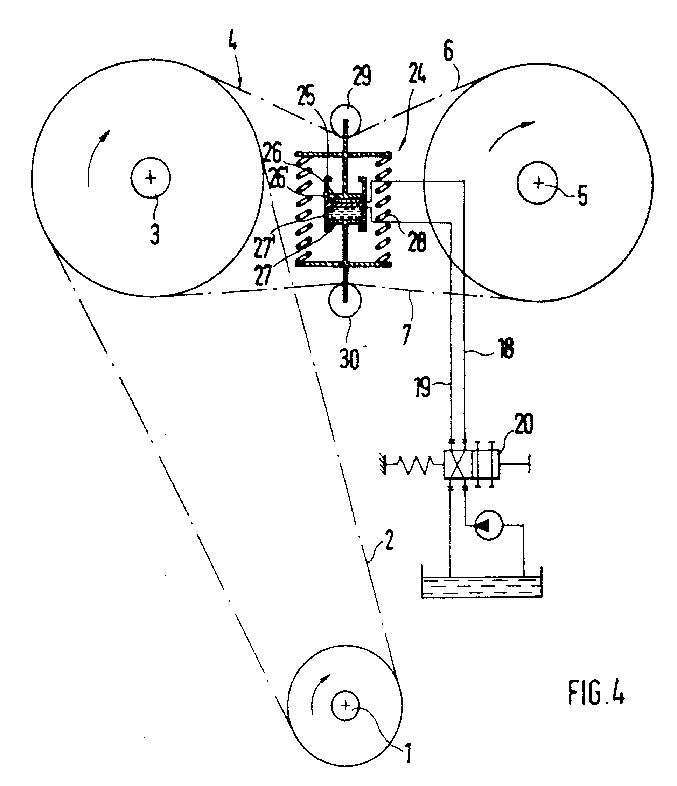

Eine alternative Spann- und Verstellvorrichtung für einen Nockenwellenantrieb ist in Fig. 4 schematisch dargestellt. Die an der Außenseite der Kette 4 angreifende Spannvorrichtung 24 besteht aus zwei in einem Gehäuse 25 koaxial geführten Hydraulikkolben 26 und 27, die mittels einer Schraubenzugfeder 28 zueinander verspannt sind. Dabei verspannen die an den Hydraulikkolben befestigten Spannrollen 29 und 30 das Lostrum 6 und das Lasttrum 7 der Kette 4 nach innen. Zur hydraulischen Verstellung weist auch hier das Gehäuse 25 zwei den Stirnflächen 26' und 27' der Hydraulikkolben 26 und 27 zugeordnete Hydraulikanschlüsse auf, die über zwei Druckleitungen 18 und 19 an das elektromagnetisch gesteuerte Hydroventil 20 angeschlossen sind. Bei Druckbeaufschlagung eines Hydraulikkolbens wirkt die Verstellkraft der an ihm angreifenden Feder-Zugkraft entgegen, so daß die Verstellkraft auch bei dieser Ausführungsform der Erfindung gering gehalten wird und für beide Verstellrichtungen gleich ist.

## Patentansprüche

1. Vorrichtung zum Verstellen der relativen Drehlage einer Nockenwelle (5) eines Hubkolbenmotors gegenüber einer sie mit einer Kette (4) antreibenden zweiten Nockenwelle (3) oder einer Kurbelwelle (1), wobei an der Kette (4) eine Spannvorrichtung (8; 24) aus zwei koaxialen Hydraulikkolben (9, 10; 26, 27) vorgesehen ist, die durch eine Schraubenfeder (12; 28) gegenläufig zueinander gegen das Lostrum (6) und das Lasttrum (7) verspannt werden und zum Verstellen der Nockenwelle (5) die Spannvorrichtung (8; 24) insgesamt quer zur Kette (4) verschoben wird, **dadurch gekennzeichnet**, daß die beiden Stirnseiten (9', 10'; 26', 27') der Hydraulikkolben (9, 10; 26, 27) wechselweise mit Hydraulikdruck derart beaufschlagbar sind, daß die auf die Hydraulikkolben (9, 10; 26, 27) wirkende Druckkraft der an ihnen wirkenden Kraft der Schraubenfeder (12; 28) entgegengerichtet ist.

2. Vorrichtung nach Anspruch 1, **dadurch gekennzeichnet**, daß zwischen den als Hohlkolben ausgebildeten Hydraulikkolben (9, 10) eine Schraubendruckfeder (12) eingelegt ist, die die auf die Hydraulikkolben (9, 10) aufgesetzten Spannschuhe (13, 14) an die Innenseite des Lostrums (6) bzw. Lasttrums (7) andrückt.

3. Vorrichtung nach Anspruch 1, **dadurch gekennzeichnet**, daß die beiden Hydraulikkolben (26, 27) mit einer Schraubenzugfeder (28) zueinander verspannt sind, wodurch die an den Hydraulikkolben (26, 27) befestigten Spannrollen (29, 30) an die Außenseite des Lostrums (6) und Lasttrums (7) angedrückt sind.

4. Vorrichtung nach einem der Ansprüche 1 bis 3, **dadurch gekennzeichnet**, daß beide Hydraulikkolben (9, 10; 26, 27) in einem gemeinsamen, ortsfesten Gehäuse (15; 25) längsgeführt sind.

5. Vorrichtung nach Anspruch 1 und 4, **dadurch gekennzeichnet**, daß das Gehäuse (15; 25) zwei Hydraulikanschlüsse (16, 17) aufweist, über die die Stirnseiten der Hydraulikkolben (9, 10; 26, 27) in Gegenrichtung zur Kraft der Schraubenfedern (12; 28) mit Hydraulikdruck beaufschlagbar sind.

6. Vorrichtung nach Anspruch 5, **dadurch gekennzeichnet**, daß die Hydraulikanschlüsse (16, 17) über Druckleitungen (18, 19) an ein in Abhängigkeit der Motordrehzahl elektromagnetisch betätigtes Hydroventil (20) angeschlossen sind.

7. Vorrichtung nach Anspruch 6, **dadurch gekennzeichnet**, daß bei Druckbeaufschlagung der einen Druckleitung (16 oder 17) die andere Druckleitung (17 oder 16) zum drucklosen Ölrücklauf dient.

## Claims

1. A device for adjusting the relative rotational position of a camshaft (5) of a reciprocating-piston engine with respect to a second camshaft (3) driving the said camshaft (5) by a chain (4) or with respect to a crankshaft (1), wherein a tensioning device (8; 24) comprising two coaxial hydraulic pistons (9, 10; 26, 27) is provided on the chain (4), the hydraulic pistons (9, 10; 26, 27) being stressed by a helical spring (12; 28) in opposite directions to each other against the slack run (6) and the loaded run (7), and wherein the tensioning device (8; 24) as a whole is displaced transversely of the chain (4) in order to adjust the camshaft (5), **characterized in that** the two front ends (9', 10'; 26', 27') of the hydraulic pistons (9, 10; 26, 27) can be acted upon alternately with hydraulic pressure in such a way that the force of the pressure acting upon the hydraulic pistons (9, 10; 26, 27) is opposite to the force of the helical spring (12; 28) acting thereon.

2. A device according to Claim 1, **characterized in that** a helical compression spring (12) is interposed between the hydraulic pistons (9, 10) constructed as hollow pistons, and presses the tensioning shoes (13, 14) mounted on the hydraulic pistons (9, 10) against the inside of the slack run (6) and the loaded run (7) respectively.

3. A device according to Claim 1, **characterized in that** the two hydraulic pistons (26, 27) are tensioned towards each other by a helical tension spring (28), as a result of which the tensioning rollers (29, 30) secured to the hydraulic pistons (26, 27) are pressed against the outside of the slack run (6) and the loaded run (7).

4. A device according to one of Claims 1 to 3, **characterized in that** the two hydraulic pistons (9, 10; 26, 27) are guided longitudinally in a common stationary housing (15; 25).

5. A device according to Claims 1 and 4, **characterized in that** the housing (15; 25) comprises two hydraulic connexions (16, 17) by way of which the front ends of the hydraulic pistons (9, 10; 26, 27) can be acted upon with hydraulic pressure in opposite directions to the force of the helical springs (12; 28).

6. A device according to Claim 5, **characterized in that** the hydraulic connexions (16, 17) are attached by way of pressure lines (18, 19) to an hydraulic valve (20) actuated electromagnetically as a function of the rotational speed of the engine.

7. A device according to Claim 6, **characterized in that** when one pressure line (16 or 17) is acted upon with pressure the other pressure line (17 or 16) is used for returning the oil without pressure.

## Revendications

1. Dispositif destiné à faire varier la position angulaire relative d'un arbre à cames (5) d'un moteur à piston alternatif par rapport à un second arbre à cames (3), entraînant le premier avec une chaîne (4) ou un vilebrequin, un dispositif de tension (8 ; 24) étant prévu sur la chaîne (4), constitué de deux pistons hydrauliques (9, 10 ; 26, 27) coaxiaux, qui sont serrés en sens contraire, contre le brin libre (6) et le brin de charge (7) par un ressort hélicoïdal (12 ; 28) et le dispositif de tension (8 ; 24) étant déplacé dans son ensemble transversalement à la chaîne (4) pour déplacer l'arbre à came (5), caractérisé en ce que les deux côtés frontaux (9', 10' ; 26', 27') des pistons hydrauliques (9, 10 ; 26, 27) sont alternativement alimentés avec la pression hydraulique, en ce que la force de pression agissant sur les pistons hydrauliques (9, 10, 26, 27) est opposée à la force du ressort hélicoïdal (18 ; 28) agissant sur ceux-ci.

2. Dispositif selon la revendication 1, caractérisé en ce qu'entre les pistons hydrauliques (9, 10) réalisés sous la forme de pistons creux, il est placé un ressort de pression hélicoïdal (12), qui presse les sabots de serrage (13, 14), placés sur les pistons hydrauliques (9, 10), contre le côté intérieur du brin libre (6) ou du brin de charge (7).

3. Dispositif selon la revendication 1, caractérisé en ce que les deux pistons hydrauliques (26, 27) sont serrés l'un par rapport à l'autre avec un ressort de traction hélicoïdal (28), les galets de tension (29, 30), fixés sur les pistons hydrauliques (26, 27), étant pressés contre le côté extérieur du brin libre (6) et du brin de charge (7).

4. Dispositif selon l'une des revendications 1 à 3, caractérisé en ce que les deux pistons hydrauliques (9, 10 ; 26, 27) sont guidés longitudinalement dans un boîtier (15 ; 25) fixe, commun.

5. Dispositif selon les revendications 1 et 4, caractérisé en ce que le boîtier (15 ; 25) comporte deux raccords hydrauliques (16, 17), par lesquels les côtés frontaux des pistons hydrauliques (9, 10 ; 26, 27) sont alimentés en pression hydraulique, dans le sens opposé à la force des ressorts hélicoïdaux (12 ; 28).

6. Dispositif selon la revendication 5, caractérisé en ce que les raccords hydrauliques (16, 17) sont raccordés par des conduites sous pression (18, 19) à une vanne hydraulique (20), à commande électromagnétique, en fonction de la vitesse de rotation du moteur.

7. Dispositif selon la revendication 6, caractérisé en ce que lorsqu'une conduite sous pression (16 ou 17) est alimentée en pression, l'autre conduite sous pression (17 ou 16) sert au retour de l'huile sans pression.
